# EUROPEAN PATENT APPLICATION

(11) **EP 1 203 793 A1**
(43) Date of publication of application: **08.05.2002**
(21) Application number: 00902003.3
(22) Date of filing: 31.01.2000
(51) Int. Cl.: C08L 95/00, C08J 3/20, E01C 7/26

(54) **ASPHALT MODIFIER, PROCESS FOR PRODUCING MODIFIED ASPHALT, AND PROCESS FOR PRODUCING ROAD PAVEMENT MATERIAL**

(30) Priority: 01.02.1999 JP 2401999; 29.07.1999 JP 21556899
(71) Applicant: Bridgestone Corporation, Tokyo 104-8340 (JP)
(72) Inventor: IZUMOTO, Ryuji, Kodaira-shi, Tokyo 187-0031 (JP)
(74) Representative: Jenkins, Peter David
(86) International application number: JP0000500
(87) International publication number: WO0046304

(57) **Abstract**

An asphalt modifier containing 1-50 wt.% of asphalt. A modified asphalt is produced by mixing the asphalt modifier and asphalt. The asphalt modifier of this invention has excellent uniformity of dispersion into asphalt so that the asphalt modifier can be effectively uniformly dispersed into asphalt for a short time, thereby enabling a modified asphalt in which modifying ingredients are uniformly dispersed in the asphalt to be produced for a short time.

## Description

### Field of the Invention

The present invention relates to an asphalt modifier, and a method of producing a modified asphalt and a paving material and, more particularly, to an asphalt modifier for producing a modified asphalt to be used as a paving mixture and pavement-surface treating material, and a method of producing a modified asphalt and a paving material.

### Background of the invention

Mixtures produced by mixing aggregate with asphalt have been widely used as paving materials for road. Asphalt mixtures of this type are required to have properties capable of lessening problems such as "rutting" that may be occurred due to the softening during summer, "cracking" that may be occurred due to the hardening during winter, "stone-spattering", and "abrasion" of pavement surfaces. In recent years, it is desired to further improve these properties because of the increase in traffic of heavy vehicles, the increase of traffic of vehicles with non-skid chains during winter, and the like.

For this, in recent years, modified asphalts, generally called as "Modified asphalt Type I" or "Modified asphalt Type II" have been used which are produced by dispersing rubber such as a SBR or thermoplastic elastomer such as a SBS into asphalt to have high strength and high viscosity.

There is another modified asphalt recently used, generally called as "high-viscosity paving binder" having further higher viscosity. This is used as paving material for value added pavements, such as pavements having noise prevention property and improved drainage property. Such value added pavements have spread recently.

It should be noted that all of the aforementioned modified asphalts contain asphalt as main component in an amount of 50 % by weight or more.

Conventionally, there are generally two types of methods of producing an asphalt mixture by mixing aggregate with such a modified asphalt. One of the types is a pre-mixing type method, in which a modifier and asphalt are mixed to previously make a modified asphalt and then aggregate is mixed with the modified asphalt. The other type is, a plant mixing type method, in which a modified asphalt is not previously made, that is, the steps for pre-mixing are omitted, and respective components are directly mixed according to mixing process such as (1)-(3) as follows:
(1) adding and mixing a modifier after aggregate and asphalt are previously mixed;
(2) mixing aggregate, asphalt, and a modifier simultaneously; and
(3) adding and mixing asphalt after aggregate and a modifier are previously mixed.

When a modifying ingredient such as rubber and thermoplastic elastomer mixed for modifying asphalt a modifier is not uniformly dispersed into the asphalt, the produced modified asphalt loses sufficient modifying effect of the modifying ingredient. Accordingly, for obtaining excellent modifying effect, it is required that the modifier is highly uniformly dispersed into the asphalt.

However, it is not easy to uniformly mix the modifier with the asphalt. For example, obtaining enough uniform mixing needs heat agitation for a long time such as 4 hours or more by using a pre-mixing equipment employing a planetary mixer.

Since a lot of time, labors, and energy for driving the equipment are needed for uniformly mixing the modifier and the asphalt as mentioned, conventionally the following methods have been proposed to solve this problem:
(1) a method of mixing modifier and asphalt by adding mineral oil and petroleum resin having the effect of improving the compatibility between rubber or thermoplastic elastomer and the asphalt (Japanese patent publication H06-107953A); and
(2) a method of mixing modifier and asphalt by previously impregnating mineral oil for improving the compatibility into rubber or thermoplastic elastomer (Japanese patent publication S58-13098A).

In the above-described plant mixing type method in which asphalt, a modifier, and aggregate are directly mixed without the pre-mixing process of previously mixing the asphalt and the modifier, it takes 1-5 minutes to complete the mixing process of the modifier, the asphalt, and the aggregate. Accordingly, modifier allowing the uniform dispersion for further shorter time is required. Therefore, to improve the uniformity of dispersion in the plant mixing type, the components and compositions of modifier underwent improvement (Japanese patent 2542309, Japanese patent publication H09-25416A).

However, any one of the aforementioned conventional methods does not obtain sufficient effect for shortening the time of mixing a modifier and asphalt. Therefore, also in the current situation, it still takes a lot of time for obtaining the uniform dispersion of modifier and asphalt or the modifier does not exhibit its modifying effect enough due to insufficient dispersion.

### Disclosure of the Invention

It is an object of the present invention to solve the aforementioned conventional problems, to provide an asphalt modifier having excellent uniformity of dispersion into asphalt so that it can be effectively uniformly dispersed into asphalt for a short time, and to provide a production method capable of producing a modified asphalt in which modifying ingredients are uniformly dispersed in the asphalt for a short time.

It is another object of the present invention to provide a method of producing a paving material having excellent uniformity of dispersion for a short time by using the asphalt modifier or the modified asphalt.

An asphalt modifier of the present invention is a modifier to be mixed with asphalt for producing a modified asphalt and is characterized by containing 1-50 parts by weight of asphalt and 50-99 parts by weight of a modifying ingredient (100 parts by weight in total).

Since the asphalt modifier of the present invention is made of the modifying ingredient and the asphalt in a predetermined amount which are mixed (preferably kneaded), the modifying ingredient can be extremely rapidly and uniformly dispersed into a mixture when the asphalt modifier and asphalt are mixed, thereby significantly shortening the mixing time as compared to a conventional modifier.

A method of producing a modified asphalt of the present invention is characterized by comprising a step of mixing such an asphalt modifier and asphalt.

A method of producing paving material of the present invention is characterized by comprising a step of mixing such an asphalt modifier, asphalt, and aggregate, or mixing such a modified asphalt and aggregate.

### Detailed Description of the Preferred Embodiments

Hereinafter, embodiments of the present invention will now be described in detail.

An asphalt modifier of the present invention consists of 1-50 parts by weight of asphalt and 50-99 parts by weight of modifying ingredients which are mixed to total 100 parts by weight.

Less than 1 wt.% of asphalt in the asphalt modifier is too less to obtain sufficient effect of improving the dispersion obtained by previously mixing the asphalt. More than 50 wt.% of asphalt in the asphalt modifier is too much so that the asphalt modifier loses its autohesion (tacking) and its fluidity and thus also loses easiness of handling. The content of asphalt in the asphalt modifier of the present invention is preferably 3-30 wt.%, more preferably 5-20 wt.%.

The asphalt to be contained in the asphalt modifier according to the present invention is not limited and may be conventional asphalt, for example, straight asphalt, semi-blown asphalt, blown asphalt, cut-back asphalt blended with asphalt emulsion, tar, pitch, or oil, and/or reclaimed asphalt. They are used alone or as a mixture of two or more of them. The asphalt may be bleached asphalt.

The modifying ingredients to be contained in the asphalt modifier according to the present invention may be ingredients having effect of improving asphalt, for example, thermoplastic elastomer; rubber such as natural rubber, synthetic rubber including polyisoprene rubber, polybutadiene rubber, random styrene-butadiene rubber, nitrile-type rubber, ethylene-propylene rubber, chloroprene rubber, acrylic rubber, and isoprene-isobutyl rubber, and reclaimed rubber; mineral oil; and petroleum resin. The modifying ingredients may be selected from the above and added suitably according to the objective.

Thermoplastic elastomer may be selected from the group consisting of synthetic rubbers such as styrene-butadiene-styrene block copolymers (SRS), styrene-isoprene-styrene copolymers (SIS), and styrene-ethylene-butylene-styrene copolymers (SEBS). They are used alone or as a mixture of two or more of them.

Preferably used as the mineral oil is, for example, petroleum oil in which an aromatic ring, a naphthene ring and a paraffin chain are combined, and in which the number of aromatic carbon atoms is 36% or more of the number of the total carbon atoms as a result of ring analysis.

Preferably used as the petroleum resin is, for example, a resin prepared by polymerization of C9 distillates of styrene-type or indene-type as a decomposition product of petroleum naphtha, or a copolymer resin prepared by polymerization of the C9 distillates and C5 distillates containing pentene, isoprene, and piperylene.

Otherwise, examples as the modifying ingredients include higher fatty acid amides; higher fatty acid salts such as lithium salt, sodium salt, potassium salt, magnesium salt, calcium salt, barium salt, zinc salt, aluminum salt, and iron salt of higher fatty acids such as lauric acid, myristic acid, palmitic acid, margaric acid, stearic acid, behenic acid, oleic acid, linolenic acid, α-eleostearic acid, β-eleostearic acid, and α-linolenic acid; polyolefin such as polyacrylamide, polyvinyl chloride, polystyrene, and high density polyethylene; organic antiblocking agent of resin compounds such as polymethyl methacrylate, polycarbonate, styrene-acrylonitrile copolymer, or inorganic antiblocking agent such as silica, calcium carbonate, magnesium carbonate, calcium sulfate, aluminum hydroxide, zinc oxide, talc, and clay; antioxidants such as hindered phenolic antioxidants, sulfur-containing antioxidants, and phosphorus-containing antioxidants; ultraviolet (UV) light absorbers such as benzophenone UV absorbers; light stabilizers such as hindered amine light stabilizers; thermoplastic resins including polyolefin resins such as ethylene-ethyl acrylate copolymer and ethylene-vinyl acetate copolymer, polystyrene resins, and polyvinyl chloride resins; inorganic fillers such as glass beads, silica, carbon black; and other additives such as anti-stripping agent, fibrous reinforcer, elastic improver, viscosity reducer, viscosity improver, pigment, and softener.

Preferably employed for producing the asphalt modifier of the present invention is a mixer capable of providing high mixing performance, for example a closed kneader such as a Bunbary mixer and a kneader, a single-screw extruder, a twin-screw extruder, and a roll. High mixing performance provided by such a mixer enables respective components contained in the modifier to be highly uniformly mixed, with the result that the obtained modifier allows sufficiently high dispersion into the asphalt.

The modifying ingredients and the asphalt may be mixed under such a condition achieving the sufficiently uniform dispersion between the modifying ingredients and the asphalt, that is, normally at 100-200 °C for 3-20 minutes, but not limited thereto.

The limitation of the asphalt modifier of the present invention is only that it should contain asphalt in an amount of 1-50 wt.%. There is no particular limitation for formulating proportions of other modifying ingredients, so the following formulating proportions in the composition are just exemplary.

### [Asphalt modifier composition (wt.%)]

Asphalt: 1-50
Thermoplastic elastomer: 10-70
Mineral oil: 0-40
Petroleum resin: 0-30
Other additives: 50 or less.

The asphalt modifier of the present invention as mentioned above can be used in both cases of the pre-mixing type and the plant-mixing type. In the pre-mixing type, the asphalt modifier is used as an asphalt modifier to be previously mixed to the asphalt for producing a modified asphalt. In the plant-mixing type, the asphalt modifier is used as an asphalt modifier to be mixed with asphalt and aggregate according to the aforementioned processes (1)-(3). In either case, the modifying ingredients can be uniformly dispersed for a significantly shorter mixing time as compared to the conventional one, thereby exhibiting sufficiently the effect of the modifying ingredients.

When the asphalt modifier of the present invention is employed to be mixed with asphalt to prepare the modified asphalt, any rate of the asphalt modifier of the present invention relative to the asphalt achieves the uniform dispersion easily. The preferred mixing rate is 1 -30 parts by weight, particularly 3-25 parts by weight, of the modifier of the present invention relative to 100 parts by weight of the modified asphalt to be produced. By suitably adjusting the amount of components within the aforementioned range of mixing ratio, Modified asphalt Type I which contains asphalt in an amount of 90-99 wt.%, Modified asphalt Type II which contains asphalt in an amount of 85-97 wt.%, and high-viscosity binder which contains asphalt in an amount of 70-90 wt.% can be easily produced.

The modifier of the present invention and the asphalt may be mixed normally at 130-200 °C for 10-30 minutes by using a mixer such as planetary mixer, but the mixing condition depends on the content of the asphalt in the modifier and the mixing proportion between the modifier and the asphalt..

In producing the modified asphalt by the method of pre-mixing type, it is preferable that a modifier preparing apparatus and a conventional pre-mixing equipment are placed side by side so that the asphalt modifier produced by the modifier preparing apparatus is directly fed into the pre-mixing equipment. This can eliminate a process for palletizing the modifier in modifier preparation and enables the modifier which still has high temperature to be fed to the pre-mixing equipment, thereby further shortening the time for producing the modified asphalt.

However, in case that the modifier preparing apparatus and a plant-mixing equipment are placed side by side, it can not obtain such effect of shortening the producing time. This is because the process time in case of the plant-mixing type is 1-5 minutes as mentioned above that is shorter than the time for preparing the modifier of required amount. That is, this brings a reverse effect of extending the process time for plant mixing.

The modified asphalt produced as mentioned above can be used as a pavement-surface treating material or may be further mixed with aggregate so as to be used as a paving material.

An asphalt to be used as a paving material is normally a mixture of 98-85 wt.% of the aggregate with filler and 2-15 wt.% of modified asphalt, wherein the aggregate may be crushed stones, crushed cobbles, gravel, sand, or recycled aggregate and the filler may be stone powder, talc, or calcium carbonate.

In case of directly mixing the modifier of the present invention, asphalt, and aggregate by the method of plant-mixing type, the mixing ratio may be the same as the case of the pre-mixing type. Also in this case, the modifier and the asphalt maybe mixed normally at 130-200 °C for 1-3 minutes by using a mixer such as a pugmill mixer, but the mixing condition depends on the content of the asphalt in the modifier and the mixing proportion among the modifier, the asphalt and the aggregate.

Hereinafter, the present invention will be described in more detail with reference to the following examples and comparative examples.

In the following examples and comparative examples, thermoplastic elastomer, mineral oil, and petroleum resin used as the modifying ingredients are as follows:
Thermoplastic Elastomer: SBS ("KRATON D-1101" produced by Shell Japan Ltd.);
Mineral Oil: process oil ("KOMOREX 300" produced by Nippon Mitsubishi Petroleum Refining Co., Ltd.);
Petroleum Resin: "NEOPOLYMER 80" produced by Nippon Petrochemicals Co., Ltd.; and
Asphalt: straight asphalt ("STRAIGHT ASPHALT 60/80" produced by Showa Shell Sekiyu K.K.).

### Examples 1-5, Comparative Examples 1-3

Thermoplastic elastomer, mineral oil, petroleum resin, and asphalt were kneaded by using a small-size plastomill ("100R100" manufactured by Toyo Seiki Seisaku-sho, Ltd.) at a temperature of 160 °C for 5 minutes to produce asphalt modifiers of which contents of asphalt were shown in Table 1 (the formulating proportions of thermoplastic elastomer, mineral oil, petroleum resin, and asphalt were suitably adjusted in such a manner as to obtain resultant modified asphalts having composition as mentioned below.).

In Comparative Example 1, however, an asphalt modifier was made by kneading the aforementioned components except asphalt, that is, only thermoplastic elastomer, mineral oil, and petroleum resin, under the same condition as mentioned above.

In Comparative Example 3, a modified asphalt was made by directly mixing asphalt, thermoplastic elastomer, mineral oil, and petroleum resin without process of previously producing an asphalt modifier.

Resultant modifiers and modified asphalts made by using the modifiers were evaluated about the following properties and the results are shown in Table 1.

### [Fluidity of Modifier]

After leaving resultant modifiers of Examples 1-5 and Comparative Examples 1, 2 for one week, their appearances were observed based on the following criteria:
Excellent : no change from the original form
Good : some change from the original form
Bad : no trace of the original form

### [Modifying Effect in case of Pre-mixing type]

In each of Examples 1-5 and Comparative Examples 1, 2, the resultant modifier and asphalt were agitated and kneaded by using a T. K. Homo mixer Mark-II of type 20 available from Tokushu Kika Kogyo Co., Ltd. at a temperature 180 °C to produce a modified asphalt having the following composition.

### Modified asphalt composition (wt.%)

Asphalt: 88
Thermoplastic elastomer: 6
Mineral oil: 1
Petroleum resin: 5

In Comparative Example 3, the asphalt and the modifying ingredients (thermoplastic elastomer, mineral oil, and petroleum resin) were directly agitated and kneaded in the same manner as the above to produce a modified asphalt having the above composition.

Two types of test samples of modified asphalt were prepared one of which was agitated for 5 minutes and the other one was agitated for 4 hours. Toughness and tenacity of each sample were measured according to "Pavement Testing Handbook" (3-5-17 Toughness and tenacity test method) of Japan Road Association.

### [Modifying effect in case of Plant-mixing type]

In each of Examples 1-5 and Comparative Examples 1, 2, the resultant modifier, asphalt, and aggregate were kneaded together by using a vertical asphalt mixer at a temperature 180 °C for 3 minutes to produce an asphalt mixture having a proportion of modified asphalt (equal to the modified asphalt having the aforementioned composition): aggregate = 5 : 95 (ratio by weight). It should be noted that the aggregate was used according to the limitation for aggregate (3-2-1 crashed stones for roads, 3-2-2 blast-furnace slag, 3-2-3 filler for asphalt mixture) described in Pavement Testing Handbook of Japan Road Association.

In Comparative Example 3, the asphalt, the modifying ingredients (thermoplastic elastomer, mineral oil, and petroleum resin), and aggregate were directly mixed in the same manner as mentioned above to produce an asphalt mixture having the same composition as mentioned above.

Low-temperature cantabro loss ratio (resistance to spattering of aggregate) at a temperature of -10 °C of each asphalt mixture was measured according to the cantabro test method of "Technical guideline for Water-permeable Pavement (Appendix 6)" of Japan Road Association. The results are shown by relative indexes based on the result of Comparative Example 1 as 100. It should be noted that the lower the cantabro loss ratio is, the better the performance is.

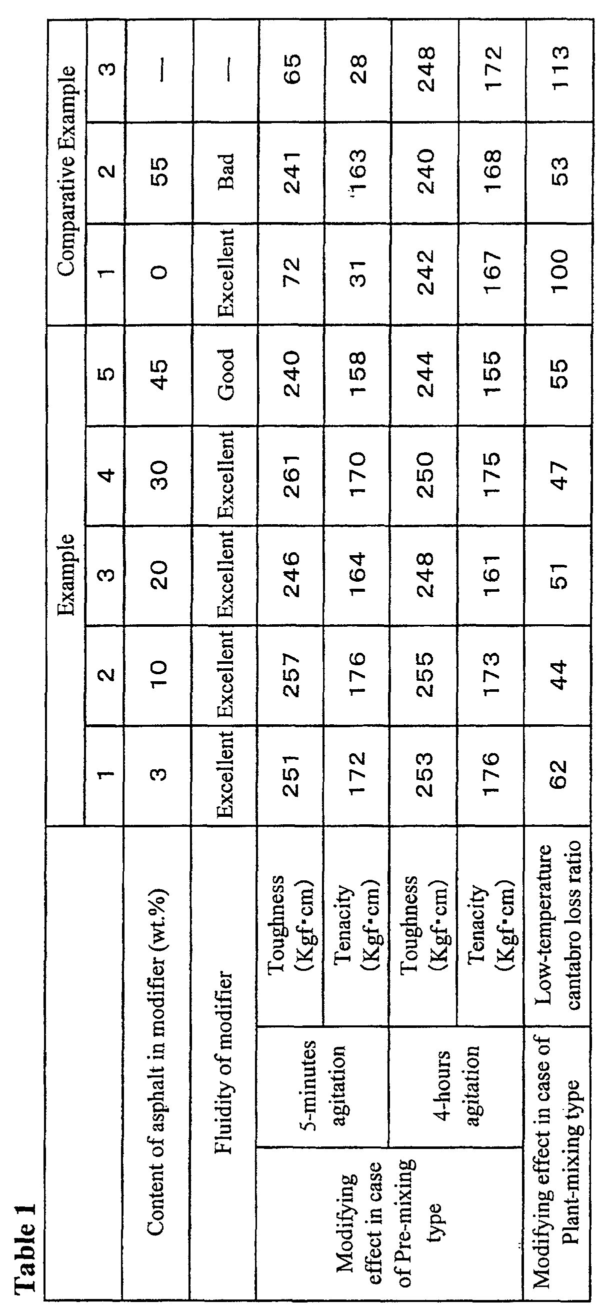

As apparent from Table 1, the modifier of any of Examples 1-5 in which 1-50 wt.% of asphalt is previously kneaded can provide excellent modifying effect as for toughness, tenacity, and cantabro loss ratio without losing its fluidity.

The modifier of Comparative Example 1 in which no asphalt is kneaded can not provide sufficient modifying effect.

On the other hand, the modifier of Comparative Example 2 containing too much asphalt loses its fluidity, thus losing its easiness of handling.

The asphalt mixture of Comparative Example 3 in which the respective modifying ingredients and asphalt are directly mixed or these and aggregate are directly mixed has poor modifying effect.

### Industrial Applicability

As described in detail, according to the present invention, the uniformity of dispersion of a modifier in asphalt can be extremely improved, thereby significantly shortening the time for mixing the asphalt and the modifier and thus achieving uniform dispersion of modifying ingredients in the asphalt for a short time. Therefore, it is possible to produce high-performance modified asphalt which can sufficiently exhibit its modifying effect by the modifying ingredients.

## Claims

1. An asphalt modifier to be mixed with asphalt for producing a modified asphalt,
said modifier consisting of 1-50 parts by weight of asphalt and 50-99 parts by weight of a modifying ingredient (100 parts by weight in total).

2. An asphalt modifier according to claim 1, wherein said modifier consists of 3-30 parts by weight of the asphalt and 70-97 parts by weight of the modifying ingredient (100 parts by weight in total).

3. An asphalt modifier according to claim 2, wherein said modifier consists of 5-20 parts by weight of the asphalt and 80-95 parts by weight of the modifying ingredient (100 parts by weight in total).

4. An asphalt modifier according to any one of claims 1 through 3, wherein the modifying ingredient and the asphalt are kneaded together.

5. An asphalt modifier according to claim 4, wherein the modifying ingredient and the asphalt are kneaded together at a temperature of 100-200 °C for 3-20 minutes.

6. An asphalt modifier according to any one of claims 1 through 5, wherein the modifying ingredient is one or more selected from the group consisting of thermoplastic elastomer, rubber, mineral oil, and petroleum resin.

7. An asphalt modifier according to any one of claims 1 through 6, wherein said modifier consists of 1-50 parts by weight of the asphalt, 10-70 parts by weight of thermoplastic elastomer, 40 or less parts by weight of mineral oil, 30 or less parts by weight of petroleum resin, and 50 or less parts by weight of other additives (100 parts by weight in total).

8. A method of producing a modified asphalt, wherein the asphalt modifier defined in any one of claims 1 through 7, and asphalt are mixed.

9. A method of producing a modified asphalt according to claim 8, wherein 1-30 parts by weight of the asphalt modifier and 99-70 parts by weight of the asphalt (100 parts by weight in total) are mixed.

10. A method of producing a modified asphalt according to claim 9, wherein 3-25 parts by weight of the asphalt modifier and 85-97 parts by weight of the asphalt (100 parts by weight in total) are mixed.

11. A method of producing a modified asphalt according to any one of claims 8 through 10, wherein said method is conducted by a modifier preparing apparatus and a pre-mixing equipment which are placed side by side, and wherein the asphalt modifier produced by the modifier preparing apparatus is directly fed into the pre-mixing equipment whereby the asphalt modifier and the asphalt are mixed.

12. A method of producing a modified asphalt according to claim 11, wherein the asphalt modifier and the asphalt are mixed at a temperature of 130-200 °C for 10-30 minutes.

13. A modified asphalt being produced by the method according to any one of claims 8 through 12.

14. A method of producing a paving material, wherein the modified asphalt defined in claim 13 and aggregate are mixed.

15. A method of producing a paving material, wherein the asphalt modifier defined in any one of claims 1 through 7, asphalt, and aggregate are mixed.

16. A method of producing a paving material according to claim 15, wherein the asphalt modifier, the asphalt, and the aggregate are mixed at a temperature of 130-200 °C for 1-3 minutes.
